# EUROPEAN PATENT SPECIFICATION

(11) **EP 0 768 232 B1**
(45) Date of publication and mention of the grant of the patent: **03.11.1999**
(21) Application number: 96113171.1
(22) Date of filing: 16.08.1996
(51) Int. Cl.: B62D 53/08

(54) **Shock absorptive support structure**
Stossdämpfende Tragstruktur
Structure de support absorbant des chocs

(30) Priority: 09.10.1995 JP 28632095
(43) Date of publication of application: 16.04.1997
(73) Proprietor: Kabushiki Kaisha Sohshin, Iruma-shi, Saitama-ken (JP)
(72) Inventor: Osada, Yoo, c/o Kakuwa Seiki K.K., Kawagoe-shi, Saitama-ken (JP)
(74) Representative: Zipse + Habersack

(56) References cited:
- CH-A- 592 541
- FR-A- 1 290 678
- US-A- 2 438 323
- US-A- 2 507 616
- US-A- 2 778 657

## Description

### BACKGROUND OF THE INVENTION

### Field of the Invention

The present invention relates to a shock absorptive support structure adapted for elastically supporting a top plate on support brackets in a coupler commonly referred to as a fifth wheel serving as coupling means between a tractor and a trailer.

### Prior Art

As the tractor coupled to the trailer by the coupler is driven to travel in a direction, a relative displacement inevitably occurs between the support bracket and the top plate in a direction substantially corresponding to the travelling direction as in a vertical direction. To solve this problem, the elastic support structure has conventionally been adopted so that said relative displacement between the support bracket and the top plate can be alleviated. For example, according to the disclosure of Japanese Utility Model Application Disclosure Gazette No. 1985-195205, a bottom of the top plate is provided with a projection downward extending to surround a space destined to receive a first elastic member having a concave bottom while the support bracket is provided on its top with a boss having a convex top and a through-hole transversely extending therethrough. The boss is tightly inserted into said concave bottom of the first elastic member so that said top plate may be elastically supported on the support bracket. A support pin is inserted into said through-hole of the boss to fix it across said space defined by said projection extending downward from the bottom of the top plate and then a second elastic member is disposed between this support pin and the top of said boss.

The above-mentioned shock absorptive support structure of well known art satisfactorily functions in practical use to assure a safety as well as comfortableness to drive so far as this support structure is relatively fresh. However, this shock absorptive support structure of well known art is disadvantageous in that the elastic member is worn away after the coupler has been used for a relatively short period. Consequently, undesirable inter-metal contact or collision occurs between the top plate and the support bracket, generating an abnormal noise as the tractor coupled to the trailer is driven. Shock caused by such inter-metal contact or collision is transmitted to a driver's seat and not only affects the comfortableness to drive but also causes breakage of parts of the support bracket such as the boss and eventually affects a safety of driving.

US-A-2507616 discloses a shock absorptive structure in a coupler for a fifth wheel, according to the preamble in claim 1.

### SUMMARY OF THE INVENTION

It is a principal object of the invention to provide a shock absorptive support structure in a coupler improved not only in economical efficiency but also in practical usefulness so that a shock due to relative displacement of a top plate and support brackets occurring in vertical direction as well as in back-and-forth direction can be effectively absorbed by the structure, a comfortableness to drive a tractor can be assured thereby, a wear or fatigue of elastic members can be minimized and thereby a high safety of driving can be maintained for a long period with the structure of a simplified construction contributing to reduce the manufacturing cost.

The object set forth above is achieved, according to the invention, by a shock absorptive support structure comprising a plural pairs of projections extending down ward from a bottom of said top plate in parallel one to another, support brackets each having a bearing hole, axle pins, and shock absorbing members each comprising an inner cylinder, an outer cylinder and an elastic member disposed between these two cylinders, said axle pins rotatably extending through the respective shock absorbing members which are then tightly received by said bearing holes of the respective support brackets which are then inserted between between the respective pairs of projections extending from the bottom of said top plate so as to leave a certain distance between tops of the respective support brackets and the bottom of said top plate and said axile pins are fixed at their longitudinally opposite ends to said projections of the top plate, said shock absorptive support structure being characterized by a bearing being provided between said axle pins and said inner cylinder.

### BRIEF DESCRIPTION OF THE DRAWINGS

Fig. 1 is a scale-enlarged side view showing important parts in a preferred embodiment of the invention as partially broken away;
Fig. 2 is a sectional front view taken along axes of respective axle pins;
Fig. 3 is an exploded perspective view of the important parts;
Fig. 4 is a view similar to Fig. 1 but showing important parts in an alternative embodiment of the invention; and
Fig. 5 is a view similar to Fig. 2 but showing the alternative embodiment in an enlarged scale and as partially broken away.

### DESCRIPTION OF THE PREFERRED EMBODIMENTS

Details of the invention will be better understood from the following description of preferred embodiments made in reference with the accompanying drawings.

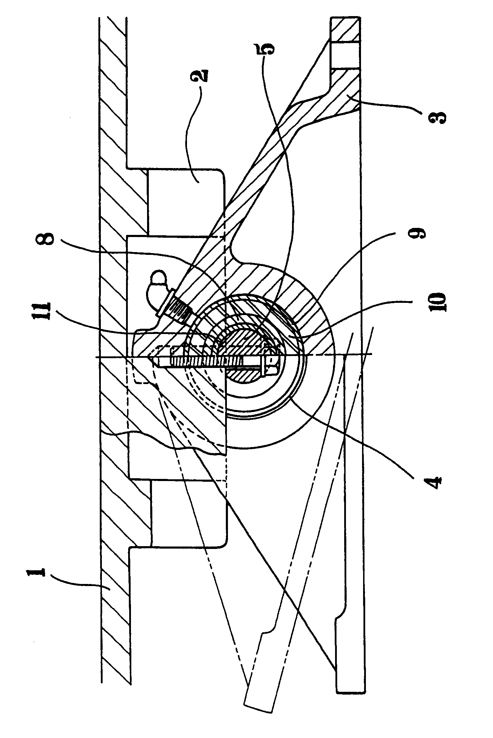

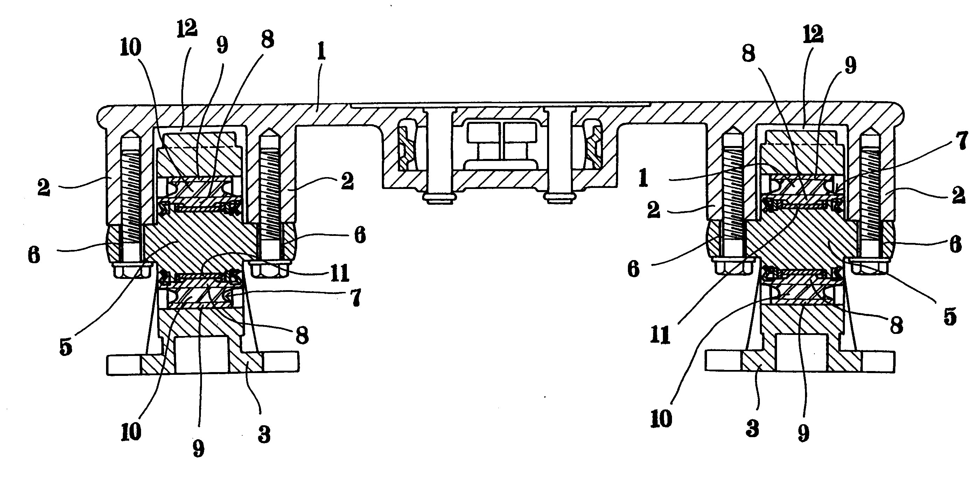

In Figs. 1 and 2, reference numeral 1 designates a top plate of the inventive coupler, which includes two pairs of parallel projections extending downward as the top plate of prior art also includes.

With the top plate attached to a tractor, these two pairs of projections are positioned at transversely opposite ends of the top plate with respect to the direction in which the tractor moves, as it has usually been in the case of the conventional top plate.

Reference numeral 3 designates support brackets which are similar to those conventionally attached to the tractor and centrally formed with bearing holes 4, respectively.

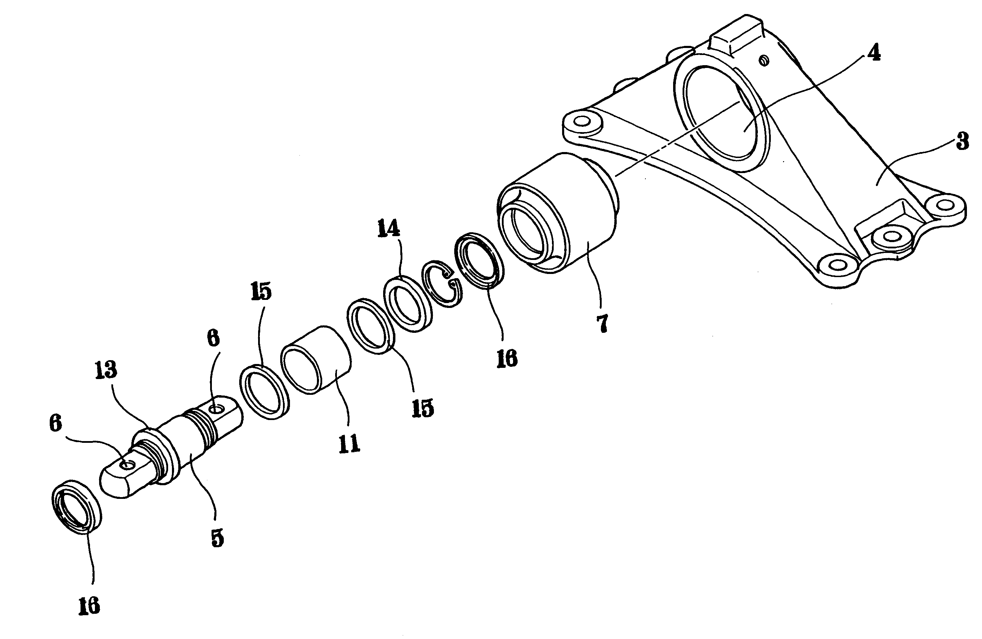

Reference numeral 5 designates axle-pins extending through respective shock absorbing members as will be described later in order to support the top plate on the support brackets 3. As will be best seen in Fig. 3, each of these axile pins 5 comprises a longitudinally intermediate cylindrical portion and longitudinally opposite end portions each of which has its radially opposite sides cut away so as to form planar surfaces. These end portions are formed with screw insertion holes 6, 6, respectively.

Reference numeral 7 designates said shock absorbing members each comprising an inner cylinder 8, an outer cylinder 9 and an elastic member 10. for example, made of rubber disposed between those inner and outer cylinders 8, 9. While the shock absorbing member integrally comprises these inner cylinder 8, outer cylinder 9 and elastic member 10 so far as this specific embodiment is concerned, it should be understood that these components may be separately provided and then assembled into a unit.

While each of said axle pins 5 may rotatably extend through the inner cylinder 8 of said shock absorbing member 7 according to the inventive principle, the specific embodiment illustrated by Figs. 1 through 3 employs a sleeve 11 disposed as a bearing between said axle pin 5 and said inner cylinder 8.

The shock absorbing members 7 through which the axle-pins 5 extend, respectively, are tightly engaged into the respective bearing holes 4 of the associated support brackets 3 so that the respective axle pins 5 may be received by the respective support brackets 3 rotatably as well as elastically.

The support brackets 3 assembled in this manner with the axle pins 5 and the shock absorbing members 7 are now inserted between the associated pairs of projections 2, 2 of the top plate 1, then the screws are inserted into the respective screw insertion holes 6, 6 formed adjacent the longitudinal opposite ends of the respective axle pins 5 as shown by Fig. 2 and these screws are threaded into the respective projections 2, 2 of said top plate 1 to support the top plate 1 on the support brackets 3.

It is very important to support the top plate 1 on the support brackets 3 with a distance 12 left between the tops of the respective support brackets 3 and the bottom of the top plate 1.

Reference numeral 13 designates a flange formed around the axle pin 5, reference numeral 14 designates a ring, reference numerals 15, 15 designate packings and reference numerals 16, 16 designate dust covers.

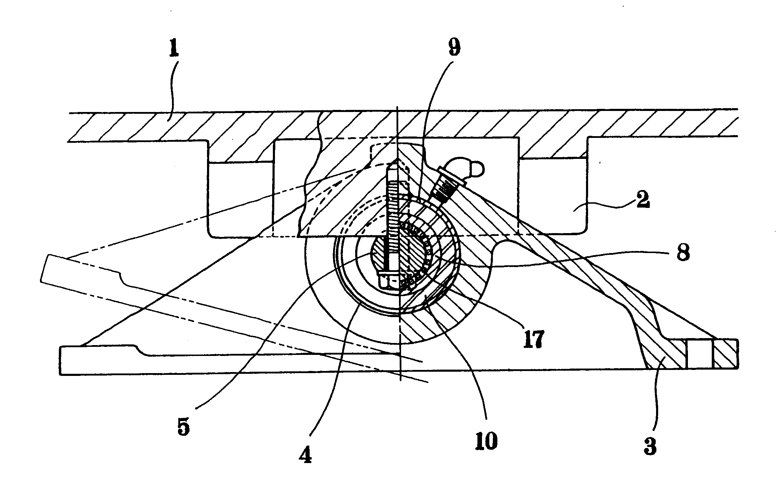

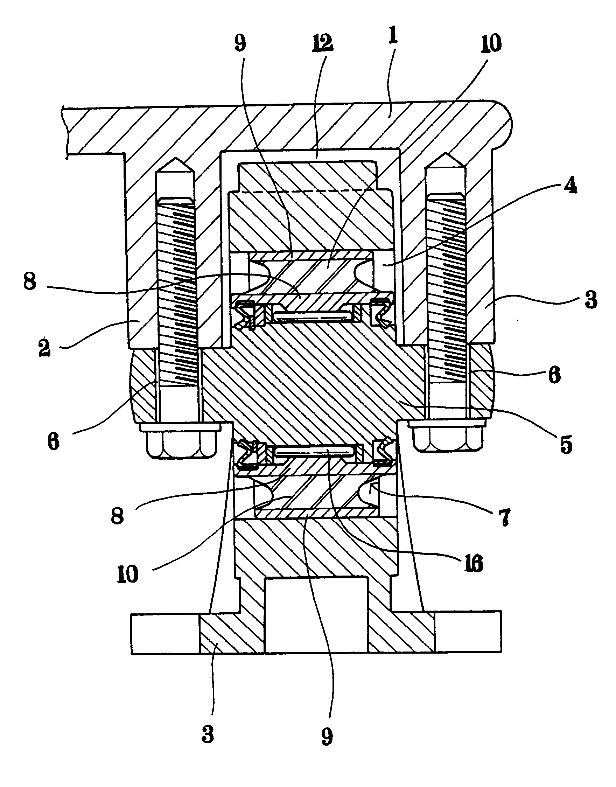

Figs. 4 and 5 show an alternative embodiment of the invention wherein the parts similar to those in the embodiment shown by Figs. 1 through 3 are designated by the same reference numerals as in the embodiment shown by Figs. 1 through 3. This embodiment shown by Figs. 4 and 5 is similar to the embodiment previously described in reference with Figs. 1 through 3 except that the sleeves 11 are replaced by respective roller bearings 16 in order to assure that the shock absorbing members 7 be rotatably supported by the respective axle pins 5.

With the inventive shock absorptive supporting structure in the coupler constructed as has been described hereinabove, the support brackets 3 are connected by the axle pins 5 and the shock absorbing members 7 to the top plate 1 so that any shock possibly occurring vertically and/or back and forth between the support brackets 3 and the top plate 1 may be effectively absorbed by said shock absorbing members 7. Additiontally, no direct collision occurs between the tops of the respective support brackets 3 and the bottom of the top plate 1, since the appropriate distance is maintained between said tops of the respective support brackets 3 and said bottom of the top plate 1.

### Effect of the Invention

As will be apparent from the foregoing description, the shock absorptive supporting structure according to the invention is characterized by its unique construction such that the axle pin rotatably extends the associated shock absorbing member, this shock absorbing member is tightly engaged together with said axle extending therethrough into the bearing hole of the associated support bracket which is then inserted between said pair of projections extending downward from the bottom of said top plate and the both ends of said axle pin are fixed to said pair of projections, leaving an appropriate distance between the top of this support bracket and the bottom of the top plate pin, so the elastic member as a component of each shock absorbing member can be protected between the inner and outer cylinders against wearing, any shock can be effectively as well as reliably absorbed by the shock absorptive supporting structure and thereby a high safety of driving can be maintained for a long period. In addition, comfortableness to drive can be enjoyed by the tractor driver, since he or she is free from any uncomfortable noise and/or shock due to inter-metallic contact or collision.

Furthermore, the shock absorptive supporting structure of the invention is of a simplified construction which can be manufactured at a low cost and is extremely efficient in practical use, because it can be implemented merely by mounting the shock absorbing members each comprising the inner cylinder, the outer cylinder and the elastic member disposed between these two cylinders around the respective axle pins surrounded by a bearing and then inserting these assemblies into the respective bearing holes formed in the respective support brackets.

## Claims

1. Shock absorptive support structure in a coupler comprising a top plate (1) having plural pairs of projections (2) extending downward in parallel to one to another from a bottom of said top plate (1), support brackets (3) each having a bearing hole (4), axle pins (5), and shock absorbing members (7) each comprising an inner cylinder (8), an outer cylinder (9) and an elastic member (10) disposed between these two cylinders, whereby said axle pins rotatably extend through the respective shock absorbing members (7) which are then tightly received by said bearing holes (4) of the respective support brackets which are then inserted between the respective pairs of projections extending from the bottom of said top plate so as to leave a certain distance between tops of the respective support brackets (3) and the bottom of said top plate (1), said axle pins (5) being fixed at their longitudinally opposite ends to said projections of the top plate,
characterized by
a bearing (11,16) being provided between said axle pins (5) and said inner cylinders (8), respectively.

## Patentansprüche

1. Stoßdämpfende Tragstruktur in einer Kupplung, umfassend eine Deckplatte (1) mit einer Mehrzahl an Paaren von Vorsprüngen (2), die sich zueinander parallel nach unten von einer Unterseite dieser Deckplatte (1) erstrecken, Stützwinkel (3) mit jeweils einem Lagerloch (4), Achsbolzen (5), und stoßdämpfende Glieder (7), von denen jedes einen Innenzylinder (8), einen Außenzylinder (9) und ein zwischen diesen zwei Zylindern angeordnetes elastisches Glied (10) umfaßt, wobei sich die Achsbolzen drehbar durch das jeweilige stoßdämpfende Glied (7) erstrecken, welche Glieder dann fest durch die Lagerlöcher (4) des jeweiligen Stützwinkels aufgenommen sind, welche Stützwinkel dann zwischen dem jeweiligen Paar der Vorsprünge eingesetzt sind, die sich von der Unterseite der Deckplatte erstrecken, um so einen bestimmten Abstand zwischen den Oberseiten der jeweiligen Stützwinkel (3) und der Unterseite der Deckplatte (1) zu belassen, und die Achsbolzen (5) an ihren längsseits gegenüberliegenden Enden an die Vorsprünge der Deckplatte befestigt sind, dadurch gekennzeichnet, daß zwischen den Achsbolzen (5) und den Innenzylindern (8) jeweils ein Lager (11, 16) vorgesehen ist.

## Revendications

1. Structure de support absorbant les chocs dans un coupleur comprenant une plaque supérieure (1) possédant une pluralité de couples de parties saillantes (2) s'étendant vers le bas parallèlement entre elles a partir d'une partie inférieure de la plaque supérieure (1), des consoles de support (3) possédant chacune un trou de palier (4), des broches formant axes (5) et des éléments (7) d'absorption des chocs, comprenant chacun un cylindre intérieur (8) et un cylindre extérieur (9) et un élément élastique (10) disposé entre ces cylindres, ce qui a pour effet que lesdites broches formant axes s'étendent, avec possibilité de rotation, à travers les éléments respectifs (7) d'absorption de chocs, qui sont alors étroitement logés dans lesdits trous de paliers (4) des consoles de support respectives, qui sont alors insérées entre les couples respectifs de parties saillantes s'étendant à partir de la partie inférieure de ladite plaque supérieure de manière à laisser subsister une certaine distance entre les parties supérieures des consoles de support respectives (3) et la partie inférieure de ladite plaque supérieure (1), lesdites broches formant axes (5) étant fixées au niveau de leurs extrémités longitudinalement opposées auxdites parties saillantes de la plaque supérieure,
caractérisée par un palier (11, 16) prévu respectivement entre lesdites broches formant axes (5) et lesdits cylindres intérieurs (8).
